**Europäisches Patentamt**

**European Patent Office**

**Office européen des brevets**

(19)

(11) Veröffentlichungsnummer : **0 373 387 B1**

(12) # EUROPÄISCHE PATENTSCHRIFT

(45) Veröffentlichungstag der Patentschrift :
**01.07.92 Patentblatt 92/27**

(51) Int. Cl.$^5$ : **B60R 11/02, H04M 1/02**

(21) Anmeldenummer : **89121480.1**

(22) Anmeldetag : **21.11.89**

(54) **Eingabeeinrichtung für ein Informationssystem in einem Kraftfahrzeug.**

(30) Priorität : **16.12.88 DE 3842413**

(43) Veröffentlichungstag der Anmeldung :
**20.06.90 Patentblatt 90/25**

(45) Bekanntmachung des Hinweises auf die
Patenterteilung :
**01.07.92 Patentblatt 92/27**

(84) Benannte Vertragsstaaten :
**DE ES FR GB IT SE**

(56) Entgegenhaltungen :
**EP-A- 0 279 233**
**DE-A- 3 534 362**
**DE-U- 8 633 792**

(73) Patentinhaber : **ROBERT BOSCH GMBH**
**Postfach 30 02 20**
**W-7000 Stuttgart 30 (DE)**

(72) Erfinder : **Knoll, Peter, Prof. Dr.**
**Albert Schweitzer Strasse 9**
**W-7505 Ettlingen 1 (DE)**
Erfinder : **König, Winfried, Dr.-Ing.**
**Murgstrasse 8**
**W-7507 Pfinztal-Berghausen (DE)**
Erfinder : **Heiland-Franzen, Christa, Dipl.-Ing.**
**Wielandstrasse 8**
**W-7514 Eggenstein-Leopoldshafen (DE)**
Erfinder : **Günther, Clemens, Dipl.-Ing.**
**Vogesentrasse 19**
**W-7831 Sexau (DE)**
Erfinder : **Geiser, Georg, Dr.-Ing.**
**R.-Schneider-Strasse 71 H**
**W-7500 Karlsruhe 51 (DE)**
Erfinder : **Haller, Rudolf, Dr.-Ing.**
**Danziger Strasse 33**
**W-7516 Karlsbad (DE)**
Erfinder : **Eck, Ralf, Dipl.Geophys.**
**Hermesweg 4**
**W-6000 Frankfurt/Main (DE)**

## Beschreibung

Die Erfindung geht von einer Eingabevorrichtung nach dem Oberbegriff des Anspruchs 1 aus. Eine derartige portable Eingabevorrichtung, die über ein Kabel mit einem Autotelefon verbunden ist, ist z. B. durch die EP-A-0 279 233 bekannt. Dabei wird über ein erstes Tastenfeld eine Rufnummer eingegeben und über ein zweites Tastenfeld die Funktion des ersten Tastenfeldes auf weitere Funktionsebenen umgeschaltet.

Weiterhin ist eine portable drahtlose Eingabevorrichtung bekannt (DE-U-86 33 792), die ausschließlich zum Bedienen eines Autoradios bestimmt ist und zu diesem Zweck auf der Vorderseite alle zur Bedienung erforderlichen Tasten und auf der Rückseite einen Infrarotsender aufweist, der mit einem Infrarotempfänger im Armaturenbrett des Kraftfahrzeuges korrespondiert. Die beiden bekannten Eingabevorrichtungen wären für den Kraftfahrer umständlich zu handhaben, wenn er verschiedene in dem Kraftfahrzeug untergebrachte elektrische Geräte, wie zum Beispiel ein Autotelefon, ein Autoradio, ein Ortungs- und Navigationssystem, eine Heizungs- oder Klimaanlage und ein motorisch bewegbares Fenster und dergleichen, über ein zentrales Informationssystem steuern soll.

Der Erfindung liegt die Aufgabe zugrunde, eine Eingabevorrichtung nach dem Oberbegriff des Anspruchs 1 derart weiterzubilden, daß mehrere elektrische Geräte von einem Kraftfahrer bei geringstmöglicher Ablenkung vom Verkehrsgeschehen bedient werden kann oder auch vom Beifahrer oder einer im Fond sitzenden Person.

Diese Aufgabe wird durch die Eingabevorrichtung nach dem Anspruch 1 gelöst. Damit ist der Vorteil verbunden, daß alle notwendigen Eingabetastaturen zur Bedienung verschiedener elektrischer Geräte zu einer übersichtlichen portablen Eingabevorrichtung zusammengefaßt werden. Dadurch wird die Auswahl der in dem Kraftfahrzeug vorhandenen elektrischen Geräte und deren Bedienung vereinfacht, wozu insbesondere das Menüfeld beiträgt, über dessen Bedienelemente ein Dialogverkehr mit einem Computer mit zugehörigem Monitor stattfindet. In diesem Fall sind also keine langwierigen Eingaben mit einer alphanumerischen Tastatur erforderlich. Lediglich für die Bedienung des Autotelefons wird dann die alphanumerische Tastatur benötigt.

Weiterhin ist es vorteilhaft, wenn die Eingabevorrichtung immer an einem bestimmten Platz im Kraftfahrzeug abgelegt wird, so daß sie während der Fahrt nicht hin- und hergeschleudert werden kann. Dabei ist es besonders vorteilhaft, wenn die Ablageeinrichtung als Köcher derart ausgestaltet ist, daß nur das Menüfeld der Eingabevorrichtung aus dem Köcher herausschaut und für den Kraftfahrer bedienbar ist. Das erleichtert insbesondere während der Fahrt die Bedienung der Eingabevorrichtung, weil dadurch der Fahrer kaum vom Verkehrsgeschehen abgelenkt wird. Er kann nach kurzer Gewöhnungszeit die Bedienelemente betätigen, ohne hinsehen zu müssen.

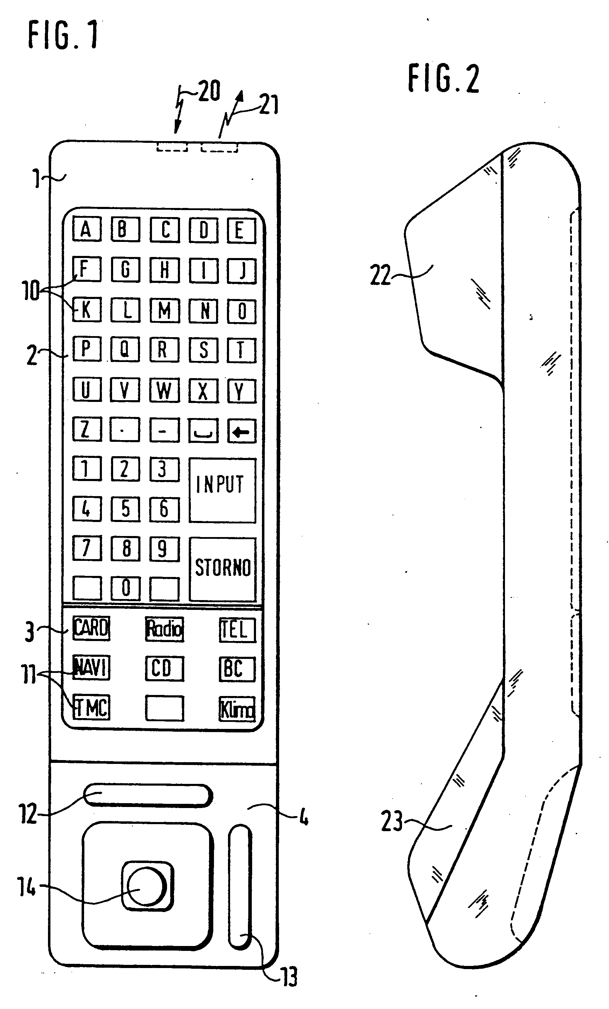

Ein Ausführungsbeispiel der Erfindung ist in der Zeichnung dargestellt und wird in der nachfolgenden Beschreibung näher erläutert. Die Fig. 1 zeigt ein Ausführungsbeispiel in Draufsicht und die Fig. 2 das Ausführungsbeispiel nach Fig. 1 in Seitenansicht.

In Fig. 1 ist ein Ausführungsbeispiel der erfindungsgemäßen Eingabevorrichtung dargestellt, das insgesamt drei abgesetzte Eingabefelder aufweist. Im oberen Bereich ist ein erstes Eingabefeld 2 dargestellt, das insgesamt 44 Eingabetasten 10 aufweist. Die Tasten sind in Reihen und Spalten angeordnet. Mit ihnen werden die alphabetischen Zeichen sowie die Ziffern 0 bis 9 eingegeben. Zwei Tasten sind durch ihre Größe besonders hervorgehoben. Die INPUT-Taste aktiviert die Dateneingabe über diese alphanumerische Tastatur, während mit der STORNO-Taste Korrekturen möglich sind. Dieses erste Eingabefeld kann verwendet werden zur werden zur Eingabe von alphanumerischen Daten oder Ziffern, wie sie bei einem Ortungs- und Navigationssystem oder beim Autotelefon benötigt werden.

Unter diesem Eingabefeld 2 schließt sich ein zweites Eingabefeld 3 an. Dieses Feld 3 weist insgesamt neun Tasten auf, die in jeweils drei Reihen und Spalten angeordnet sind. Mit diesen Tasten können die einzelnen elektrischen Geräte angewählt werden, die im Kraftfarzeug vorhanden sind. Sie tragen die entsprechenden Gerätenamen. Beispielsweise wird mit der RADIO-Taste das Autoradio eingeschaltet oder ausgeschaltet. Ebenso kann mit den weiteren Tasten TEL das Autotelefon eingeschaltet werden und mit der Taste CARD eine Benutzungsberechtigung geprüft werden. Die Tasten NAVI, CD, BC, TMC und KLIMA bezeichnen die weiteren Geräte, die im Kraftfahrzeug eingebaut sind, Die Bezeichnung und Auswahl der elektrischen Geräte in einem Kraftfahrzeug ist beliebig und nicht an diese Beschriftung des zweiten Eingebefeldes 3 gebunden. Die Tastenbelegung kann geändert werden, so daß beispielsweise auch eine Taste für ein Schiebedach, Fensterheber oder der Kofferraumentriegelung verwendbar ist. Die Tasten sind einrastbar oder beleuchtbar, so daß auf einfache Weise deren Inbetriebnahme erkennbar ist.

Im unteren Teil der Eingabevorrichtung 1 ist ein drittes Eingabefeld 4 vorgesehen. Es weist drei Bedienelemente auf, nämlich ein Cursorbedienelement 14 mit dessen Hilfe ein Cursor auf einem Monitor in x/y-Richtung und damit eine bestimmte Gerätefunktion gesteuert werden kann, eine Menütaste 12, die zur Einblendung eines Menüs auf dem Monitordient und eine Übernahmetaste 13, mit der Auswahl der in dem Menü jeweils dargestellten Funktion quittiert wird. Die Menütaste 12 und Übernahmetaste 13 sind rechwinklig um das Cursorbedienelement 14 angeordnet. Dadurch ist eine besonders ergonomische und sichere Bedienung gewährleistet.

Wie aus der Figur 2 ersichtlich ist, ist die Eingabevorrichtung 1 im Bereich des dritten Eingabefeldes 4 leicht nach unten abgewinkelt. Auf der den Eingabetasten gegenüberliegenden Seite des Gehäuses sind eine Hörmuschel 22 und eine Sprechmuschel 23 angeordnet. Die Sprechmuschel 23 ist im abgewinkelten Teil angeordnet. Dadurch erhält die Eingabevorrichtung die Form eines bekannten Telefonhörers. Mit dieser können Telefongespräche in üblicher Weise geführt werden. Die Eingabefelder sind mit ihren Eingabetasten 10 tiefer liegend angeordnet, so daß sie gegen ein ungewolltes Betätigen geschützt sind.

An der oberen Stirnseite der Eingabevorrichtung 1 sind Infrarot-Empfänger und -Sender 20, 21 eingebaut, mit denen die Datenübertragung zu der Zentralstation erfolgt. Der Aufbau der Infrarotsende- und Empfangseinrichtung ist dem Fachmann bekannt, so daß er nicht näher beschrieben werden muß.

Die Funktionsweise dieser Eingabevorrichtung 1 ist aus den Tastenbezeichnungen ersichtlich. Soll beispielweise das Autoradio eingeschaltet werden, dann muß der Bediener auf die Taste im zweiten Eingabefeld 3 RADIO drücken. Bei Druck auf die Menütaste 12 erscheint auf dem Monitor der Informationsvorrichtung ein Menü, mit dem beispielweise ein Sender, die Lautstärke, der Frequenzgang oder ähnliche Funktionen des Autoradios ausgewählt werden können. Die Auswahl aus den Menüfunktionen erfolgt mit dem Cursorbedienelement 14. Hat der Bediener mit dem Cursor auf dem Monitor eine gewünschte Funktion ausgewählt, dann wird diese Funktion durch Druck auf die Übernahmetaste 13 geschaltet. Auf diese Weise kann der Bediener alle gewünschten Funktionen, die er zur Einstellung des Autoradios benötigt, anwählen.

Wurden auf diese Weise alle für das Autoradio benötigte Funktionen angewählt, dann kann durch Druck auf eine weitere Auswahltaste des Auswahlfeldes 3 ein weiteres Gerät angewählt werden. Wird auf diese Weise das Autotelefon angewählt, dann kann mit der Zifferntastatur des ersten Eingabefeldes 2 die entsprechende Rufnummer eingegeben werden. Die Nummern erscheinen zweckmäßigerweise auf dem Monitor des Informationssystems.

Zur Ablage wird die Eingabevorrichtung 1 in ein in der Zeichnung nicht dargestellte Ablegevorrichtung im Armaturenbrett oder auf der Mittelkonsole des Kraftfahrzeuges abgelegt, die einen entsprechend geformten Köcher aufweist. In weiterer Ausgestaltung der Erfindung ist es vorgesehen den Köcher derart auszugestalten, daß das zweite Eingabefeld 3 und/oder das dritte Eingabefeld 4 frei zugänglich sind, wenn die Eingabevorrichtung 1 in den Köcher eingesteckt ist. Dadurch ist gewährleistet, daß die Bedienung der Eingebevorrichtung 1 auch im eingesteckten Zustand leicht möglich ist.

**Patentansprüche**

1. Portable Eingabevorrichtung (1) für ein Informationssystem in einem ein Autotelefon aufweisenden Kraftfahrzeug, wobei die Eingabevorrichtung (1) auf einer Seite zwei Eingabefelder (2,3) mit Tasten (10,11) zur Eingabe von Informationen und auf der anderen Seite das Mikrofon (22) und den Hörer (23) des Autotelefons aufweist, wobei das erste Eingabefeld (2) Eingabetasten (10) zur Eingabe von alphabetischen und numerischen Zeichen und das zweite Eingabefeld (3) Auswahltasten (11) aufweist, **dadurch gekennzeichnet,** daß ein drittes Eingabefeld ein Menüfeld (4) mit Bedienelementen (12-14) zum Aufrufen eines zu dem Informationssystem gehörenden Menüs, zum Steuern eines Cursors und zum Übernehmen der mit dem Cursor gewählten Steuerfunktionen aufweist, daß die Auswahltasten (11) des zweiten Eingabefeldes (3) zum Auswählen verschiedene elektrische Geräte dienen und daß die Datenübertragung zwischen Eingabevorrichtung (1) und Informationssystem drahtlos erfolgt.

2. Eingabevorrichtung nach Anspruch 1, dadurch gekennzeichnet, daß im Kraftfahrzeug ein Köcher für die Eingabevorrichtung (1) vorgesehen ist und daß die Eingabevorrichtung (1) so in den Köcher einsteckbar ist, daß nur das Menüfeld (4) bedienbar ist.

3. Eingabevorrichtung nach Anspruch 1 oder 2, dadurch gekennzeichnet, daß die Eingabevorrichtung (1) eine Infrarot-Sende- und Empfangseinrichtung (20, 21) aufweist.

4. Eingabevorrichtung nach einem der Ansprüche 1 bis 3, dadurch gekennzeichnet, daß die Eingabetasten (10, 11, 12) gegenüber der Gehäuseoberfläche der Eingabevorrichtung (1) abgesenkt angeordnet sind.

5. Eingabevorrichtung nach einem der Ansprüche 1 bis 4, dadurch gekennzeichnet, daß die Eingabevorrichtung (1) die Form eines Handapparates für ein Autotelefon hat.

## Claims

1. Portable input device (1) for an information system in a motor vehicle having a car telephone, the input device (1) having two input panels (2, 3) with keys (10, 11) for inputting information on one side and the microphone (22) and earpiece (23) of the car telephone on the other side, the first input panel (2) having input keys (10) for inputting alphabetic and numeric characters and the second input panel (3) having selection keys (11), characterised in that a third input panel has a menu panel (4) with control elements (12-14) for calling up a menu belonging to the information system, for controlling a cursor and for accepting the control functions selected with the cursor, in that the selection keys (11) of the second input panel (3) are used for selecting various electrical apparatuses, and in that the data transmission between the input device (1) and the information system takes place without wires.

2. Input device according to Claim 1, characterised in that a case for the input device (1) is provided in the motor vehicle, and in that the input device (1) can be inserted in the case such that only the menu panel (4) can be operated.

3. Input device according to Claim 1 or 2, characterised in that the input device (1) has an infrared transmission and reception device (20, 21).

4. Input device according to one of Claims 1 to 3, characterised in that the input keys (10, 11, 12) are arranged recessed with respect to the housing surface of the input device (1).

5. Input device according to one of Claims 1 to 4, characterised in that the input device (1) has the form of a handset for a car telephone.

## Revendications

1. Dispositif portatif d'entrée de données (1) pour un système d'informations d'un véhicule automobile équipé d'un téléphone de voiture, le dispositif d'entrée de données (1) ayant d'un côté deux champs d'entrée (2, 3) avec des touches (10, 11) pour introduire des informations et de l'autre côté le micro (22) et l'écouteur (23) du téléphone de voiture, le premier champ d'entrée (2) ayant des touches d'entrée (10) pour introduire des signes alphanumériques et numériques et le second champ d'entrée (3) comporte les touches de sélection (11), dispositif caractérisé par un troisième champ d'entrée avec un champ de menu (4) muni d'éléments de commande (12-14) pour appeler l'un des menus du système d'informations pour commander un curseur et pour la prise en main des fonctions de commande choisies par le curseur, les touches de sélection (11) du second champ d'entrée de données (3) servant à la sélection de différents appareils électriques et la transmission de données se fait par une liaison sans fil entre le dispositif d'entrée de données (1) et le système d'informations.

2. Dispositif d'entrée de données selon la revendication 1, caractérisé en ce que le véhicule est équipé d'un carquois pour recevoir le dispositif d'entrée de données (1) et ce dispositif (1) se place dans le carquois pour que seul le champs de menu (4) puisse être utilisé.

3. Dispositif d'entrée de données selon la revendication 1 ou 2, caractérisé en ce que le dispositif d'entrée (1) comporte un dispositif d'émission et de réception à infrarouge (20, 21).

4. Dispositif d'entrée de données selon l'une des revendications 1 à 3, caractérisé en ce que les touches d'entrée (10, 11, 12) sont en retrait par rapport à la surface extérieure du boîtier du dispositif d'entrée (1).

5. Dispositif d'entrée de données selon l'une des revendications 1 à 4, caractérisé en ce que le dispositif d'entrée (1) se présente sous la forme d'un combiné de téléphone de voiture.

# FIG. 1

# FIG. 2